# EUROPEAN PATENT APPLICATION

(11) **EP 0 867 736 A2**
(43) Date of publication of application: **30.09.1998**
(21) Application number: 98105350.7
(22) Date of filing: 24.03.1998
(51) Int. Cl.: G02B 6/16, G02B 6/34

(54) **A method and device for wavelength and bandwidth tuning of an optical grating**

(30) Priority: 26.03.1997 US 824753
(71) Applicant: JDS FITEL INC., Nepean, Ontario K2G 5W8 (CA)
(72) Inventor: Farries, Mark, Nepean, Ontario, K2E 6L5 (CA); Obhi, Jasvinder, Nepean, Ontario, K2J 4N6 (CA)
(74) Representative: Frei, Alexandra Sarah

(57) **Abstract**

A device for controlling the optical response of a Bragg grating (12) has a block of aluminum (14) to which is continuously attached a length of an optical fiber (10) with Bragg grating (12) impressed therein. The attachment allows for heat transfer between the block and the grating. Two different temperature levels are maintained at two ends of the grating by controllably heating the block at the corresponding ends (15,17). The simultaneous graded heating and expansion of the block produces dynamic chirping of the grating with attendant improved reflectivity profile of the grating.

## Description

### Field of the Invention

This invention relates to a method and device for modifying the wavelength and/or bandwidth response of a Bragg grating and more particularly provides a device and method for tuning a Bragg grating.

### Background of the Invention

Optical filters are used in various configurations to pass or reject, and multiplex or demultiplex optical signals. Bragg grating filters are gaining popularity. They can be designed within waveguides to reflect a specific band and transmit the remaining range of wavelengths, thus constituting a bandpass filter.

One type of a Bragg filter, which has been developed for sensing stress and/or temperature changes in structures is incorporated or embedded in the core of an optical fiber described in United States patent number 4,807,850. Here, permanent periodic grating elements of varying refractive index can be embedded or impressed in the core of an optical fibre by exposing the core through the cladding to the interference pattern of two coherent beams of ultraviolet light that are directed against the optical fibre symmetrically to a plane normal to the fiber axis. This results in a situation where the material of the fiber core has permanent periodic variations in its refractive index impressed therein by the action of the interfering ultraviolet light beams thereon, with the individual grating elements (i.e. the periodically repetitive regions of the core exhibiting the same refractive index behavior) being oriented normal to the fiber axis so as to constitute the Bragg grating. The embedded Bragg grating reflects the light launched into the fiber core for guided propagation therein in a propagation direction; only that light having a wavelength within a very narrow range dependent on the grating element periodicity is reflected back along the fibre axis opposite to the original propagation direction, while being substantially transparent to light at wavelengths outside the aforementioned narrow band so that it does not adversely affect the further propagation of such other light. In effect, this type of grating creates a narrow notch in the transmission spectrum, and by the same token a similarly narrow peak in the reflection spectrum. In the applications for which this kind of Bragg filter has been developed, any stresses or temperature changes encountered at the location of the structure in which the Bragg filter is embedded affect the grating and change its periodicity, or the index of the refraction of the material of the core, or both, so that the position of the central wavelength in the spectrum is shifted, thus providing an indication of the stress or temperature changes existing or taking place in the structure being monitored at the location of the grating.

United States patent number 5,007,705 issued April 16, 1991 to Morey et al. discloses, various means are disclosed for intentionally shifting the reflection wavelength response of a Bragg grating. By deliberately varying the period of the grating or altering the index of refraction in a predetermined manner, by external forces or actions on the fibre section containing the grating in a controlled manner, a variable light filtering element is provided. The modification can include a shift of the characteristic reflective spectrum or band, or an expansion or contraction of the spectrum.

Morey et al. state:
"One way to mechanically tune the Bragg filter... is to bond or otherwise attach the fiber section..., at locations that are situated at longitudinally spaced sides of the grating region..., to a support of a material with a much larger coefficient of thermal expansion than that of those of the fiber section... The fiber section would then be mechanically strained by changing the temperature of the system. Yet, such a system would have a larger thermal mass than the fiber section... alone and consequently have longer response times."... The means suggested in the Morey et al. patent all point to a uniform heating/cooling, or uniform stretching/compressing of the entire length of an optical filter.

US Patent 5,042,898 issued August 27, 1991 to Morey et al. discloses a device for compensating, or counteracting, the effect of temperature on a Bragg grating filter. The device has means for applying to an optical waveguide including a grating optical filter therein, longitudinal strains the magnitude of which varies with temperature (to which means and the waveguide are subjected at the same time) so that the changes in the central wavelength of the filter that are attributable to the changes in the strain compensate the changes that are attributable to the temperature of the grating filter.

Other references pertaining to the subject are: L. Dong et al., Tuning and Chirping Fiber Bragg Gratings by Deep Etching, IEEE Photonics Technology Letters, Vol. 7, No. 12, pp. 1433-1435, 1995; and G.A. Ball et al., Compression-Tuned Single-Frequency Bragg Grating Fiber Laser, Optic Letters, Vol. 19, No. 23, pp. 1979-1981, 1994.

As is commonly understood, chirping denotes the provision of a variation in the grating period i.e. distances between individual adjacent grating elements; chirping can be provided by an original manufacturing process or dynamically, e.g. by a non-uniform stretching of a grating-type filter.

### Summary of the Invention

In is an object of the present invention to provide a method and an apparatus for modifying the response of an optical filter, typically a Bragg grating filter, in a manner to produce a controlled reversible expansion of the central wavelength band characteristic to the filter. It is also desirable to controllably shift the wavelength range of the expanded band, also in a reversible manner.

The present invention is based on the concept (contrary to that of US Patent 5,042,898) of intensifying the performance control of an optical filter by simultaneous application of a temperature gradient along the length of the filter and coactive, rather than counteractive, application of longitudinal stress (tensile or compressive) of the corresponding waveguide portion. It has been found that the bandwidth of a selected signal, its wavelength range and even, to a degree, the reflectivity profile of the waveguide, can be effectively controlled in accordance with the invention as will be shown below.

In accordance with this invention, there is provided, a device for modifying the optical response of an optical grating embedded in an optical waveguide, the device comprising:
an optical waveguide having a grating embedded therein, and
means for simultaneously applying to the optical waveguide and said grating a longitudinal graded strain and a co-active longitudinal temperature gradient.

In accordance with another aspect of the invention, there is provided a method of modifying the optical response of an optical grating embedded in an optical waveguide, the method comprising:
imparting onto said optical grating a simultaneous controlled temperature gradient and a co-active longitudinal stress gradient.

The thermal control means may be a heating means, a cooling means or both. Preferably, the control means include temperature-stabilizing means for maintaining a controlled predetermined temperature at least at one, preferably at both ends of the grating.

The temperature applied controllably to the block of the material may vary over time.

In accordance with another aspect of the invention, there is provided a method of modifying the optical response of an optical grating embedded in an optical waveguide, the method comprising:
subjecting the optical grating to a simultaneous controlled temperature gradient and a co-active longitudinal stress gradient.

The temperature change may be exemplified by a controlled heating of the waveguide, the heating resulting in a thermal elongation of the waveguide; a co-active longitudinal stress in this case would be a controlled tensile stress. Alternatively, the temperature change may be effected by a controlled cooling wherein the co-active stress would be a compressive stress.

In a typical embodiment of the invention, the method would involve a controlled heating of an optical filter in a manner to produce a temperature gradient therein, with simultaneous corresponding tensile stress gradient. As a result, the filter would be stretched and heated at the same time, the invention residing in the fact that the heating/stretching would be applied non-uniformly, or non-linearly, onto the grating across its length.

A typical optical filter is exemplified by a Bragg grating filter which has a plurality of grating elements constituted by periodic refractive index variations of a predetermined initial period X. As is well known, such grating is characterized by a narrow reflectivity peak, or band, centered around a central wavelength. The wavelength of the band can be shifted, without changes to its width, by stretching the grating. Temperature changes of the entire grating also effect a band wavelength shift. On the contrary, non-uniform stretching or non-uniform heating of the filter results in a broadening of the characteristic band of the filter combined optionally with a shift of the band on the wavelength.

In accordance with the invention, the optical filter can be, for example, simultaneously stretched and heated in a non-uniform manner. As a result, the initial (typically but not necessarily constant) period of the optical filter changes into a predetermined range of periods (Δ **X)**, with attendant stretching and optional shifting of the initial wavelength response of the optical filter.

### Brief Description of the Drawings

The invention will be explained in more detail by way of the following description to be taken in conjunction with the accompanying drawings in which:
Fig. 1 is a schematic perspective view of an exemplary device of the invention;
Fig. 2 is a top plan view of another embodiment of the device of the invention;
Fig. 3 is a graph of reflectivity against wavelength of a typical Bragg grating filter;
Fig. 4 is a graph of grating period against length of the filter, illustrating the tuning action of the device of the invention as illustrated in Fig. 1;
Fig. 5 is a graph of reflectivity against wavelength corresponding to the sloped line of Fig. 4;
Fig. 6 is a graph of grating period against length of the filter, illustrating the tuning action of the device as illustrated in Fig. 2, and
Fig. 7 is a graph of reflectivity against wavelength corresponding to the graph of Fig. 6.

### Detailed Description of the Invention

In the following specification, detailed dimensions and numerical parameters are deliberately omitted, as such data are by now commonly known in the art. For instance, the dimensions of a typical optical fiber with a Bragg grating impressed therein, the wavelength of a typical band characteristic of such filter, or the magnitude of shifts as a function of strain or temperature are known as exemplified by the description of the above-mentioned Morey patents 5,007,705 and 5,042,898 the specifications of which are incorporated herewith by reference.

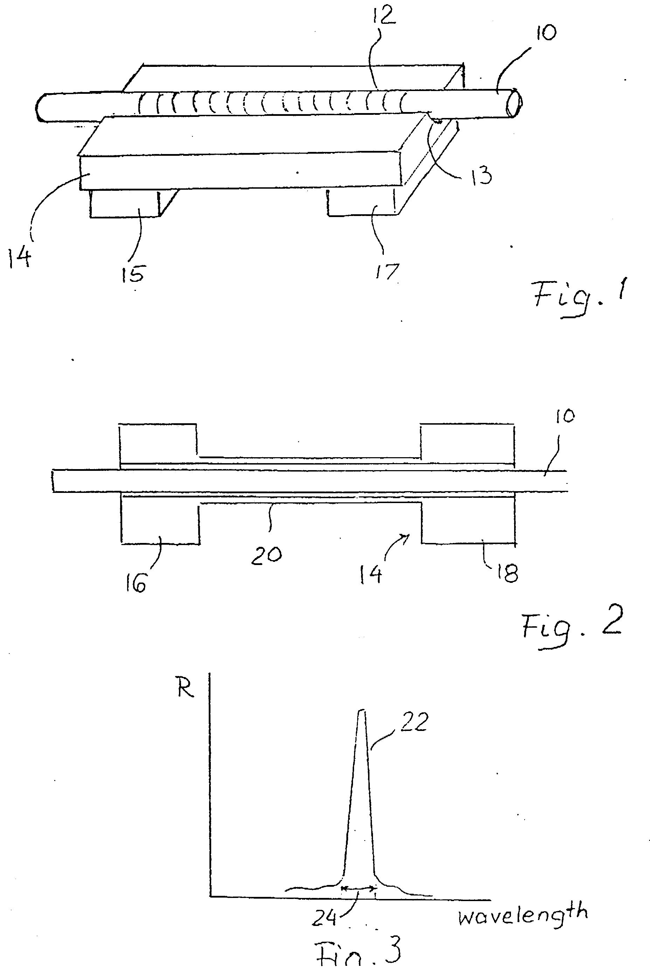

Referring now to Fig. 1, the reference numeral 10 denotes a length of an optical fiber with a Bragg grating impressed therein to thus form an optical filter. The grating elements 12 have a uniform spacing or period X. The fiber 10 is mounted in a groove of an aluminum block 14 and glued to the block with an epoxy adhesive along the entire length of the groove.

The glue may be applied thinly at an elevated temperature with the fiber under an initial tension, so that when the assembly is cooled, the fiber will not be compressed.

A heating/cooling element 15 is provided at one end of the aluminum block 14 and fixed thereto and a similar element 17 is fixed at the other end of the block 14. The purpose of the elements 15 and 17 is to conduct a thermal input from a source of heat or cold (not shown in the drawing) to the respective ends of the block 14. The heat or cold is transferred from the block 14 to the fiber 10. Both the block and the fiber undergo thermal expansion (or contraction), commensurate to their respective thermal expansion coefficients. The coefficient for the material of an optical fiber is approximately 0.6 x 10⁻⁶, while the coefficient for aluminum is several times greater, 23 x 10⁻⁶.

The block 14, as seen in a plan view has a rectangular shape and a uniform thickness. It stands to reason that the rate of heat transfer of the block 14 is uniform along the length of the fiber 10. In an alternative embodiment shown schematically in Fig. 2, the block 14 consists of two broad end portions 16, 18 and a narrower neck portion 20 bridging the end portions 16, 18. It will occur evidently to those familiar with physics that the heat (or cold) supplied e.g. to the end portion 16 through the corresponding heating element (not visible in Fig. 2), will be transferred more rapidly over the broad end portion 16 than through the neck portion 20, partly because of reduced cross-section, thus increased resistance, and partly because of increased heat losses in the narrower portion 20.

Although not shown in Fig. 1 and Fig. 2, means are also provided for maintaining the temperature at one or both ends of the grating at a desired level. Such means are commonly known in the art.

The principle of operation of the device is similar in the case of heat or cold applied to the block. It will be assumed hereinafter for simplicity that heat only is applied.

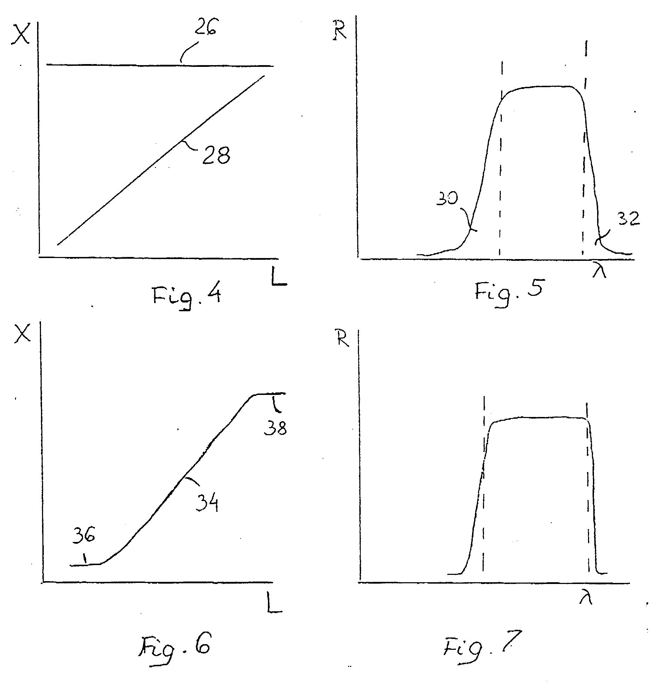

The effect of the operation of the device of Fig. 1 on the optical response of the grating 10 will be illustrated in Figs. 3-7.

Fig. 3 is representative of a typical optical response of a Bragg grating with a uniform period X of the grating elements. When the waveguide is uniformly stretched, the central wavelength of the peak 22 will shift towards higher wavelengths without changing the width of the base wavelength 24.

Similarly, when the filter 10 is uniformly heated as proposed e.g. in the Morey '705 patent, the central wavelength will also shift without changing the width of the base wavelength.

Fig. 4 illustrates schematically the periodicity of the grating filter 10 along the length L of the filter. The upper, horizontal line 26 is representative of the initial period X of the grating when no mechanical nor thermal action is exerted on the filter 10 of Fig. 1 or Fig. 2.

When a temperature T₁ is imposed at the left end of the block 14, the block will expand starting from the left side as the heat transfers towards the right end of the block and into the fiber 10. Accordingly, the fiber undergoes a stretching starting from the left end. A state of thermal equilibrium is reached at which the heat is constantly supplied at the temperature T₁ to the left end (element 15) of the block 14 while the temperature at the right end of the block is maintained at a constant level (different than T₁), e.g. 25 deg. C. At this point, the period of the fiber 10 over its length L is represented approximately by the sloped line 28 of Fig. 4, the lowest point of the line 28 corresponding to the cooler end of the filter 10. This gradient in the period is the result of two factors - the graded heating of the filter 10 and the co-acting graded tensile stress imparted onto the filter 10 by the graded expansion of the aluminum block 14 to which the fiber 10 is continuously secured. While the fiber will also expand (in a graded manner) under the graded heating, the block 14 will expand to a severalfold greater degree. Thus, the thermal expansion of the fiber becomes virtually meaningless, while the stretching imparted by the expansion of the block 14 will co-act with the influence of the graded heating on the period of the filter 10.

The graph of Fig. 3 corresponds to the horizontal line of Fig. 4, representing the initial uniform periodicity of the grating of the filter 10.

Fig. 5 illustrates graphically the optical response of the fiber 10 due to the operation of the device of the invention (and the use of the method of the invention). It will be seen that the initial bandwidth 24 (Fig. 3) has broadened considerably and has also shifted to a degree controlled by the temperature gradient between the ends of the filter 10.

The operation of the device of invention is of course reversible. The graph of Fig. 5 will return to the shape of Fig. 3 when the effect of temperature onto the block 14 and the fiber 10 is withdrawn by the return of the temperature to the initial level. In optical communication, it is often desirable to "hide" a band between two limiting wavelength ranges, then stretch the band and shift it to cover one of the ranges, and then "shrink" the band and store it in the original narrow wavelength slot.

An effect analogous to the one illustrated in Fig. 4 and Fig. 5 can be achieved by replacing the heating action with a cooling action. To this end, a Peltier type heater/cooler (not shown in the drawing) can be employed in association with the device of Fig. 1 or Fig. 2. The Peltier device incorporates the temperature-maintaining means discussed hereinabove.

In the optical communication field, it is usually desired that the band fully "fills" a desired wavelength channel wherein the reflectivity profile of the band assumes a "top hat", or rectangular shape. This is advantageous for a variety of reasons. With this in mind, it will be noted that the graph of Fig. 5 still has side lobes 30, 32 on either side of the main band which is defined by the two vertical dashed lines. The lobes may pose a crosstalk problem and are usually deleterious and unwanted. As will be shown below, the invention incorporates means for at least reducing the lobes by modifying the reflectivity response of the filter to approximate the ideal, rectangular shape as defined by the dashed lines of Fig. 5. The device as illustrated in Fig. 2 is representative of this concept.

Since the end portions 16, 18 exhibit, in the longitudinal direction of the filter 10, significantly larger cross-sectional area than the neck portion 20, it follows that the heat transfer in the end portions will be much more rapid than in the neck portion. When heat is applied at one end of the device of Fig. 2, this heat transfer difference results in the two gradients - thermal and mechanical stress gradients - being more pronounced in the part of the filter 10 corresponding to the neck portion of the block 14 than in the portions of the filter corresponding to the end portions of the block 14. The combined gradient is illustrated in Fig. 6 as a sloped line 34 with two horizontal end sections 36, 38.

The optical response of the filter so tuned is represented in Fig. 7. By comparison with the graph of Fig. 5, the reflectivity profile (R versus λ) is more rectangular-shaped, or has smaller lobes, than the profile of Fig. 5.

An alternative to the device of Figs. 1 and 2 is to attach the filter 10 to the conductive substrate in a manner approximating a continuous affixment, e.g. by clamping or fixing the fiber to the conductive substrate at several spots The substrate may have any regular or irregular shape as dictated by the desired heat transfer pattern.

Although the gratings shown are preferably impressed within an optical fibre, other optical waveguide structures can conveniently be utilized; for example a plurality of gratings can be written into a slab waveguide wherein heating elements can be used to control the wavelength reflectivity response of the gratings.
Other embodiments may be envisaged. For example the device and method of this invention may be used for filtering, demultiplexing and dispersion compensation tuning of optical signals.

## Claims

1. A device for modifying the optical response of an optical grating embedded in an optical waveguide, the device comprising:
an optical waveguide having a grating embedded therein, and
means for simultaneously applying to the optical waveguide and said grating a longitudinal graded strain and a co-active longitudinal temperature gradient.

2. The device of claim 1 comprising:
a block of a thermally conductive material having a coefficient of thermal expansion higher than the coefficient of thermal expansion of the material of the optical grating,
a length of an optical waveguide having a grating therein, the optical waveguide secured to the block in a manner at least approximating a continuous attachment of the waveguide to the block, and
a thermal control means for controlling the temperature of the block at least along the length of the optical waveguide to effect a predetermined controlled temperature gradient of the block along the length of the waveguide and a simultaneous longitudinal stress of said waveguide.

3. The device of claim 2 wherein said thermal control means comprises at least one heating means disposed at one end of said grating, for applying a controlled temperature to said grating.

4. The device of claim 2 wherein said thermal control means comprises at least one cooling means.

5. The device of claim 2 wherein said optical waveguide is secured to said block in a manner to enable a heat transfer from said block to said waveguide along the entire length of the filter.

6. The device of claim 2 wherein said block has a variable cross-sectional area in the longitudinal direction of said waveguide.

7. The device of claim 3 wherein said thermal control means comprises a first heating means disposed at one end of said grating, a second heating means disposed at the distal end of said grating, and means for maintaining the temperature of said grating at said one end and said distal end.

8. The device of claim 1 wherein said optical waveguide is an optical fiber with a Bragg grating embedded therein.

9. A method of modifying the optical response of an optical grating embedded in an optical waveguide, the method comprising
imparting onto said optical grating a simultaneous controlled temperature gradient and a co-active longitudinal stress gradient.

10. The method of claim 9 wherein said temperature gradient is non-linear.

11. The method of claim 9 wherein said temperature gradient is analogous to said stress gradient so that said gradients are additive.

12. The method of claim 9, comprising
applying a controlled first temperature at one end of the grating, and
applying a controlled second temperature, different than said first temperature, at the distal end of said grating.
